# EUROPEAN PATENT APPLICATION

(11) **EP 2 661 078 A1**
(43) Date of publication of application: **06.11.2013**
(21) Application number: 13174410.4
(22) Date of filing: 12.09.2006
(51) Int. Cl.: H04N 7/24

(54) **Apparatus and methods for delivering and presenting auxiliary services for customizing a channel**

(30) Priority: 12.09.2005 US 716475 P; 08.11.2005 US 270370
(62) Divisional of application: 06814606.7
(71) Applicant: Qualcomm Incorporated, San Diego, CA 92121-1714 (US)
(72) Inventor: Charlebois, Mark, San Diego, CA California 92129 (US); Collins, Bruce, San Diego, CA California 92131 (US); Walker, Gordon Kent, Poway, CA California 92064 (US); Chen, An Mei, San Diego, CA California 92129 (US)
(74) Representative: O'Neill, Aoife

(57) **Abstract**

Apparatus and methods for customizing a media channel include receiving a presentation associated with a base service and an auxiliary presentation associated with an auxiliary service. Further, the apparatus and methods include providing a customized channel to a device, where the customized channel is based on a combination of at least a portion of the base service with at least a portion of the auxiliary service.

## Description

### Claim Of Priority Under 35 U.S.C. §119

The present Application for Patent claims priority to Provisional Application No. 60/716,475 entitled "AUXILLIARY SERVICES FOR THE DELIVERY OF CUSTOMIZATION DATA FOR A CHANNEL," filed September 12, 2005, and assigned to the assignee hereof and hereby expressly incorporated by reference herein.

### BACKGROUND

The disclosed embodiments relate generally to the operation of content distribution systems, and more particularly, to methods and apparatus for providing and playing an auxiliary service in conjunction with a base service in a media distribution system.

In current content delivery/media distribution systems, a content provider provides content in the form of audio, video, multimedia, real-time, and non real-time content to a network associated with a content retailer. The network operates to distribute the content to end user devices, which subscribe to certain groups of content known as a package through the content retailer.

Currently, the view of the service on different end user devices associated with different content retailers is essentially the same. As all the data for a service is multicast over a single set of flows, there is no existing mechanism for the delivery of supplementary data along with the service.

Thus, it is desirable to enable content retailers to customize the content presented to their subscribers when the same service is offered by multiple content retailers.

### SUMMARY

Auxiliary services deliver content that is specific to a content retailer. This data can be advertisements, announcements, promotional information, URL links, barkers, etc. The auxiliary service content is combined with the content of the common or base service to provide a customized presentation to the subscriber.

In one aspect, a method of customizing a channel comprises receiving a definition of a plurality of base presentations associated with at least one base service, and receiving a definition of a plurality of auxiliary presentations associated with at least one auxiliary service. The method further comprises receiving a definition of a plurality of customized channels each comprising a predetermined combination of at least one of the plurality of base presentations and at least one of the plurality of auxiliary presentations, each of the customized channels associated with one of a plurality of retailers operable to provide multimedia service to a device. In a related aspect, at least one processor is configured to perform the above-described actions. In another related aspect, a computer program resident in a computer readable medium that, when executed, directs a computer device to perform the actions noted above.

In another aspect, an apparatus for providing content information comprises a means for receiving a definition of a plurality of base presentations associated with at least one base service, and a means for receiving a definition of a plurality of auxiliary presentations associated with at least one auxiliary service. Additionally, the apparatus comprises a means for receiving a definition of a plurality of customized channels each comprising a predetermined combination of at least one of the plurality of base presentations and at least one of the plurality of auxiliary presentations, where each of the customized channels is associated with one of a plurality of retailers operable to provide multimedia service to a device.

In a further aspect, an apparatus for providing customized content comprises a content server having a base presentation definition for each of plurality of base presentations corresponding to at least one base service and an auxiliary service definition for each of a plurality of auxiliary presentations corresponding to at least one auxiliary service. The apparatus further comprises a custom channel record for each of a plurality of retailers operable to define customized content to a device, where each custom channel record comprises a custom definition based on a predetermined combination of at least one base presentation definition and at least one auxiliary service definition. Additionally, the apparatus comprises a generator module operable to generate and transmit a message comprising each customized channel record.

In yet another aspect, a method for presenting customized content information comprises receiving a plurality of base presentations corresponding to at least one base service, and receiving a plurality of auxiliary presentations corresponding to at least one auxiliary service. The method further comprises receiving a definition of a plurality of custom channels each corresponding to one of a plurality of predetermined retailers, wherein each of the plurality of custom channels comprises a definition associating at least a predetermined one of a plurality of base services with at least a predetermined one of a plurality of auxiliary services. Additionally, the method comprises generating a custom channel from a predetermined combination of at least one of the plurality of base presentations and at least one of the plurality of auxiliary presentations based on the received definition of the plurality of custom channels. In a related aspect, at least one processor is configured to perform the above-described actions. In another related aspect, a computer program resident in a computer readable medium that, when executed, directs a computer device to perform the actions noted above.

In still another aspect, an apparatus for providing content information comprises a means for receiving a plurality of base presentations corresponding to at least one base service, and a means for receiving a plurality of auxiliary presentations corresponding to at least one auxiliary service. Further, the apparatus comprises a means for receiving a definition of a plurality of custom channels each corresponding to one of a plurality of predetermined retailers, wherein each of the plurality of custom channels comprises a definition associating at least a predetermined one of a plurality of base services with at least a predetermined one of a plurality of auxiliary services. Additionally, the apparatus comprises a means for generating a custom channel from a predetermined combination of at least one of the plurality of base presentations and at least one of the plurality of auxiliary presentations based on the received definition of the plurality of custom channels..

In another aspect, a wireless device for providing customized content comprises a computer platform having a media manager module disposed thereon. The media manager module is operable to receive a plurality of base presentations corresponding to at least one base service, a plurality of auxiliary presentations corresponding to at least one auxiliary service, and a definition of a plurality of custom channels each corresponding to one of a plurality of predetermined retailers, wherein each of the plurality of custom channels comprises a definition associating at least a predetermined one of a plurality of base services with at least a predetermined one of a plurality of auxiliary services. The media manager module is further operable to initiate generation of a custom channel from a predetermined combination of at least one of the plurality of base presentations and at least one of the plurality of auxiliary presentations based on the received definition of the plurality of custom channels.

### BRIEF DESCRIPTION OF THE DRAWINGS

Fig. 1 is a schematic diagram of an aspect of a system for providing customized content and channels;

Fig. 2 is a schematic diagram of an aspect of a relationship between a plurality of entities and a plurality of customized channels based on the system of Fig. 1;

Fig. 3 is a schematic diagram of an aspect of a system information message transported by the system of Fig. 1;

Fig. 4 is a schematic diagram of an aspect of a marketplace content retailer record associated with the SI message of Fig. 3;

Fig. 5 is a schematic diagram of an aspect of a package record associated with the marketplace content retailer record of Fig. 4;

Fig. 6 is a schematic diagram of an aspect of a tier record associated with the marketplace content retailer record of Fig. 4;

Fig. 7 is a schematic diagram of an aspect of a channel record associated with the marketplace content retailer record of Fig. 4;

Fig. 8 is a schematic diagram of an aspect of service definition associated with the SI message of Fig. 3;

Fig. 9 is a schematic diagram of an aspect of a service record associated with the service definition of Fig. 8;

Fig. 10 is a schematic diagram of an aspect of a service type record associated with the service definition of Fig. 8;

Fig. 11 is a schematic diagram of an aspect of a rating record associated with the service definition of Fig. 8;

Fig. 12 is a schematic diagram of an aspect of a flow record associated with the service definition of Fig. 8;

Fig. 13 is a schematic diagram of an aspect of an auxiliary service record associated with the service definition of Fig. 8;

Fig. 14 is a schematic diagram of an aspect of an auxiliary flow record associated with the auxiliary service record of Fig. 13;

Fig. 15 is a schematic diagram of an aspect of a media presentation guide (MPG) block record associated with MPG information of Fig. 3;

Fig. 16 is a schematic diagram of an aspect of channel customization record associated with the MPG block record of Fig. 15;

Fig. 17 is a schematic diagram of an aspect of data and records stored by content server 60 of Fig. 1;

Fig. 18 is a schematic diagram of an aspect of functional components of the wireless device of Fig. 1;

Fig. 19 is a schematic diagram of an aspect of functional components of the media distribution system of Fig. 1;

Fig. 20 is a flowchart of an aspect of a method of customizing a channel; and

Fig. 21 is a flowchart of an aspect of a method playing customized content information.

### DETAILED DESCRIPTION

The following detailed description describes one or more aspects of a content delivery system. The system is especially well suited for use in wireless network environments, but may be used in any type of network environment, including but not limited to, communication networks, public networks, such as the Internet, private networks, such as virtual private networks (VPN), local area networks, wide area networks, long haul networks, or any other type of data or communication network.

Auxiliary services provide a mechanism to deliver content that is specific to a content retailer, and/or a billing and customer service (BCS) provider, to supplement a base service. A base service provides media presentations to a device, and each content retailer (and/or BCS provider) may customize each base service to provide a unique presentation. As such, each content retailer (and/or BCS provider) may customize each base service, and each customized view of the base service is referred to as a channel. Content retailers (and/or BCS providers) may combine one or more customized channels into a tier, and one or more tiers into a package. Further, each content retailer (and/or BCS provider) may offer one or more packages for subscription to a device. Thus, auxiliary services can be bundled with a base service to define a channel.

The auxiliary service may be a non real-time service. In this case, in several aspects, the files downloaded may also be known as the auxiliary presentations, may have one of of the following defined roles in relation to the base service of an associated channel, although other roles or combinations of the below roles may exist:

Intro: the file contains media that is presented before an associated presentation on the base service;

Outro: the file contains media that is presented after an associated presentation on the base service;

Advertisement: the file contains media that is presented at specified times during an associated presentation on the base service; and

Barker: the file contains media that is presented in place of an associated presentation on the base service to users who have not subscribed to the given base service presentation.

For example, a content retailer and/or BCS may customize a channel to require that a user see an intro before viewing a base service presentation, an outro after viewing the base service presentation, or a channel -specific advertisement during the base service presentation. Further, for example, the channel may provide barkers for delivery to unsubscribed users.

In addition, an auxiliary service may be processed in real time in combination with a real time service. In several aspects, for example, an auxiliary service may provide a sequence of URLs. In this case, the auxiliary presentation, i.e. the URLs, are received and processed in real time, in conjunction with an associated presentation on the base service.

Thus, auxiliary services enable content retailers and/or BCS providers to customize a media service delivered to an end user device.

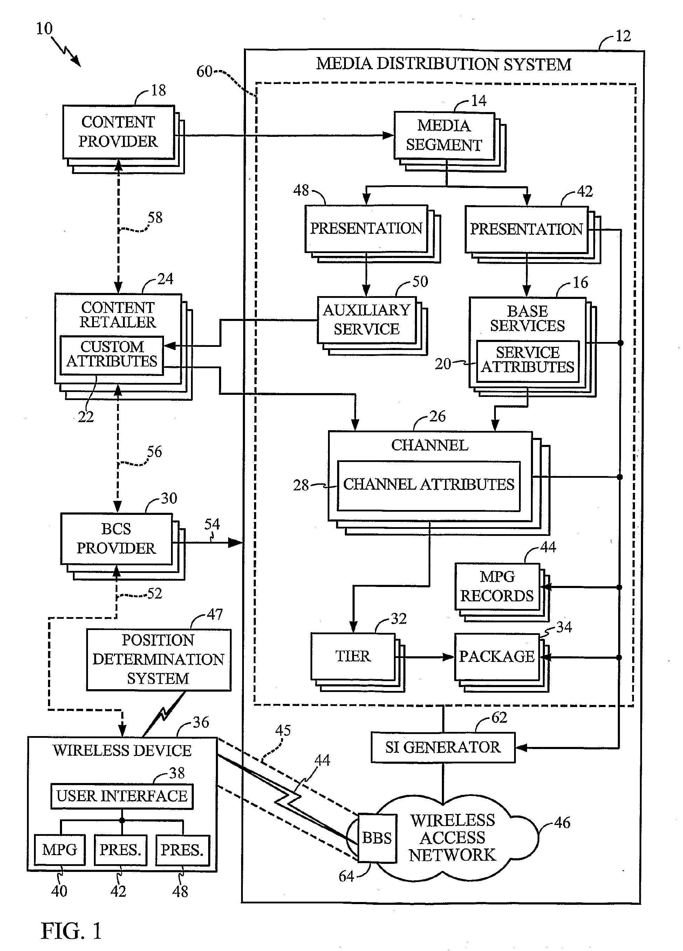

Referring to Fig. 1, aspects of a system 10 for providing customized content and channels includes a media distribution system ("MDS") 12 that operates to receive media segments 14, which form a plurality of base services 16 or common channels, from a plurality of content providers 18. Further, for each of the plurality of base services 16, MDS 12 includes service attribute information 20 or common channel information, which defines and describes the corresponding base service. Additionally, MDS 12 receives custom attribute information 22 from each of a plurality of content retailers 24. Custom attribute information 22 includes content retailer-specific definitions and descriptions for each of the plurality of base services 16, which in several aspects supplement or replace the corresponding service attribute information 20. MDS 12 is operable to generate a customized view of each base service 16 for each content retailer 24 by replacing service attribute information 20 with custom attribute information 22. In several aspects, the customized view includes presentation 42 from base service 16 in some predetermined combination with an auxiliary presentation 48 from an auxiliary service 50. Auxiliary presentation 48 and auxiliary service 50 are provided to customize and enhance a base service 16 to allow for differentiation between content retailers 24. These customized views of each base service 16 are defined as channels, customized channels or purchase items 26, which are content retailer-specific due to the customizations and which are available to users for subscription/purchase. The combination of service attribute information 20 and custom attribute information 22 thereby define customized channel attribute information 28 for each of the plurality of channels 26. Each content retailer 24 or billing and customer service (BCS) provider 30, which both may be referred to in combination as a retailer, may then group various combinations of channels 26 into tiers 32, and various combinations of tiers 32 into packages 34 to offer, such as on a subscription basis, to devices associated with the given content retailer 24 and/or BCS provider 30, such as wireless device 36.

In several aspects, for example, each content retailer 24 and/or BCS 30 provider can provide one or more customized channels 26 on a user interface 38 of a subscribed wireless device 36 in the form of presentation 42 from base service 16 in combination with an auxiliary presentation 48 from an auxiliary service 50. Each presentation 42 and auxiliary presentation 48 comprises a form of media that includes one or more media segments 14. Media segments 14 include audio, video, multimedia, datacast, real-time, and non real-time content.

In several aspects, service attribute information 20 and custom attribute information 28 comprise essentially the fields or records, but with different values. Custom attribute information 28, for example, may be retailer-specific information utilized to give the presentation of the service by the given retailer a unique look and feel. For example, the fields or records associated with either information 20 and/or 28 may include at least one of: a name and a description associated with a given language; an additional description providing more details than the previously-mentioned description; an associated universal resource identifier (URI) or universal resource locator (URL) that references a source of more information relating to the service; a type of device recommended to receive the service; an icon associated with the type of device; an icon to identify or represent the service; a start time; a duration; a genre; a parental rating; an intro; an outro; an advertisement; a barker; an Internet Protocol datacast; and any other attribute or descriptor associated with a service. In particular, the combination of a given base service 16 with one or more retailer-defined auxiliary presentations 48 and/or auxiliary services 50 provides a unique view of a channel-related information for each retailer.

Thus, system 10 comprises several aspects of a transport system that operates to create and transport multimedia content flows 45 across data networks. Each flow 45 is typically used to deliver a single media component of a real-time presentation, or a file containing a non real-time presentation, or SI messages 44 (described below). Further, each flow 45 is a logical stream within a "multiplex," which is a set of flows available in a given area. Therefore, the transport system is suitable for use in transporting media from a content provider to a media distribution system for broadcast distribution. Advantageously, system 10 enables content retailers 22 and/or BCS providers 30 to customize base services 16 to provide customized channels 26 having media presentations that combine presentations 42 from base service 16 with auxiliary presentations 48 from auxiliary services 50 to subscribed devices.

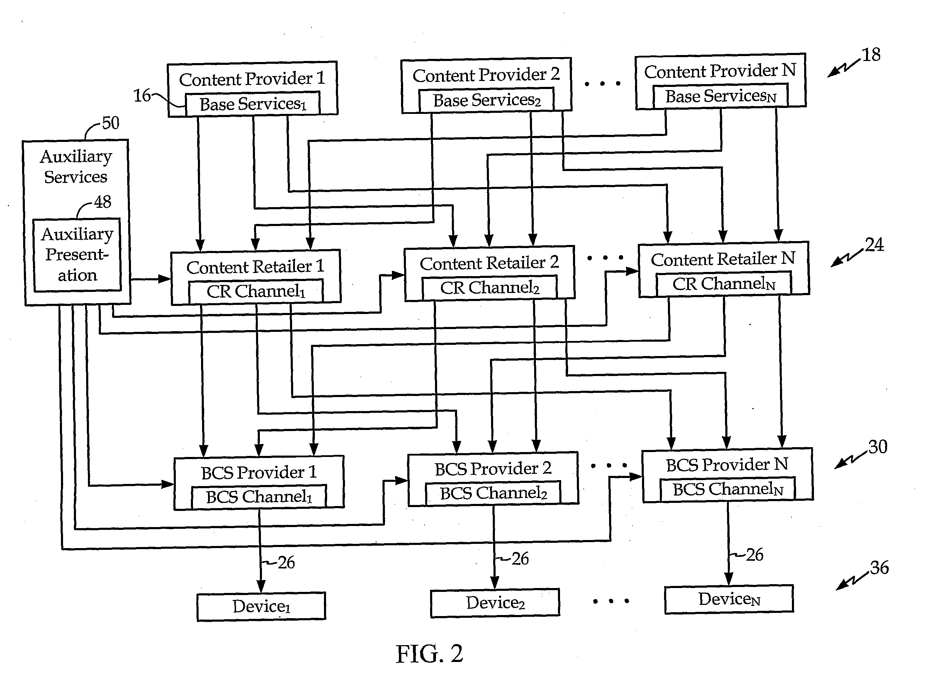

Referring to Fig. 2, as noted above, auxiliary services 50 can be tied to a content retailer 24 (and/or BCS provider 30) to deliver customized content to devices 36, where the customized content can be used across base services 16 or channels 26. For instance, a single auxiliary service 50 can provide a cache of advertisements that can be used across the channels 26 of the content retailer 24.

Any number of devices may be operable with system 10 to receive and play/display content and content information. Wireless device 36 is one such device, and includes a device such as a cellular telephone, a personal digital assistant, a laptop computer, and any other wireless device operable to receive and play/display media. It should be noted, however, that in one or more aspects of system 10, virtually any number or type of wired or wireless device capable of playing/displaying media may be utilized.

In Fig. 1, the components of system 10 may each have a number of defined roles that allow certain functions to be separated from other functions. It should be noted, however, that in any given implementation of system 10, any given component or organization may perform multiple roles.

In several aspects, for example, BCS provider 30 comprises a business entity that provides the user billing and customer support services on behalf of one or more content retailers 24. Each device in system 10, such as wireless device 36, is associated with one BCS provider 30, such as through a subscription agreement 52. As such, BCS provider 30 may supply subscription data 54 to MDS 12.

Content retailer 24 comprises a business entity that defines packages 34 and offers them for subscription through one or more associated BCS providers 30. Accordingly, each content retailer 24 provides packages 34 and the associated packaged data to MDS 12. Further, for example, each content retailer 24 may be associated with one or more BCS providers 30 through a content retail agreement 56.

Although content retailer 24 and BCS provider 30 are represented as separate entities, it is contemplated that they may be combined into a single entity.

Content provider 18 may comprise a business entity that supplies content delivered to the user, such as device 36, through base services 16. For example, each content provider 18 supplies media segments 14 and the associated media data to MDS 12. Each media segment 14 may comprise one or more of video, audio, multimedia content, clips, real-time and non real-time content, scripts, programs, or any other type of suitable content. Further, for example, each content provider 18 may be associated with one or more content retailers 24 through a content retail agreement 58.

MDS 12 comprises any combination of wired and wireless networks, and associated computer devices and servers, which operates to distribute content for delivery to users. MDS 12 may comprise an optimized broadcast network designed and optimized to deliver high-quality content to selected devices over plurality of optimized communication channels. Further, for example, MDS 12 may comprise one or more content servers 60 that store the previously mentioned media, data and records, along with the logic and executable instructions to enable the functionality of MDS 12. In several aspects, for example, content server 60 and/or MDS 12 includes a system information (SI) message generator 62 having hardware and/or software, including memory, executable instructions and a processor, operable to generate SI message 44 based on the data within content server 60. For example, SI message generator 62 includes generator logic for compiling SI message 44 from the data within MDS 12, and transceiver logic for receiving all SI message-related data and sending SI message 44 out of MDS 12 for distribution to devices. Additionally, for example, MDS 12 may include wireless access network 46 having a broadcast base station (BBS) 64 that provides a transport interface to allow MDS 12 to deliver SI message 44 and content in the form of content flows to wireless access network 46 for broadcast/multicast to devices, such as wireless device 36.

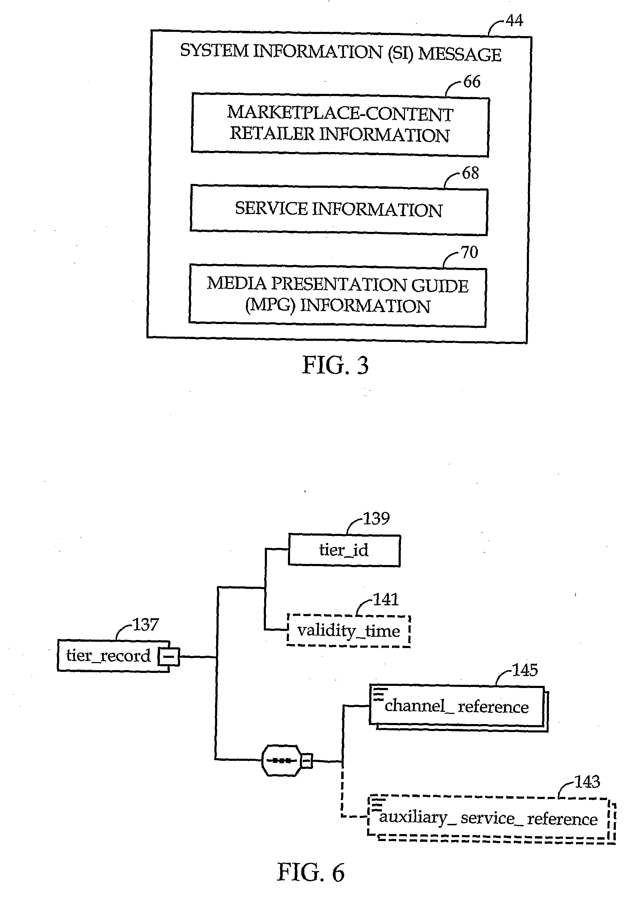

Referring to Fig. 3, SI message 44 comprises a set of information that enables a device to locate services or subscribe to packages on behalf of the user, and to describe marketplace information 66, service information 68 and media presentation guide (MPG) information 70 to the user. Marketplace information 66 includes information describing each BCS provider 30, content retailer 24, package 34, tier 32, and channel 26. Service information 68 includes information about each base service 16 and auxiliary service 50 available in system 10. MPG information 70 includes information about the contents of channels 26, as may be utilized to construct a media presentation guide (MPG) 40 on a user interface 38 of a subscribed device, such as wireless device 36. MPG 40 comprises a schedule of presentations 42, optionally supplemented by auxiliary services 50, on each of the plurality of channels 26.

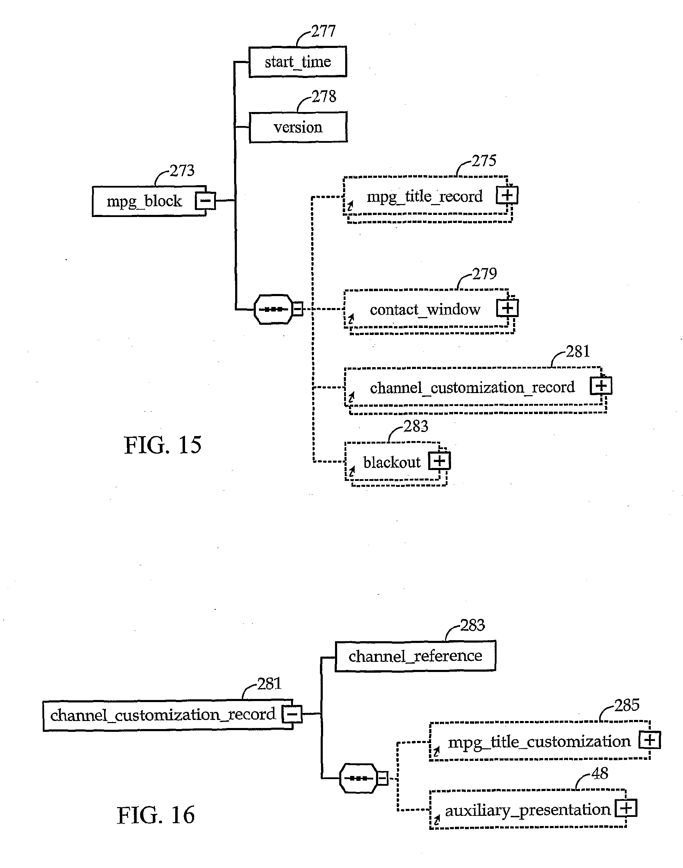

For example, MPG 40 is constructed based on media presentation guide title records 275 (Fig. 15) and channel customization records 281 (Figs. 15 and 16) associated with each presentation 42, 48, base service 16, auxiliary service 50 and channel 26. For example, MPG title records 275 and channel customization records 281 may be part of a system information (SI) message 44 sent from MDS 12 to wireless device 36 via a wireless access network 46, as will be discussed below in more detail. Thus, each MPG 40 is customized on each device according to the associated content retailer 24 and/or BCS 30.

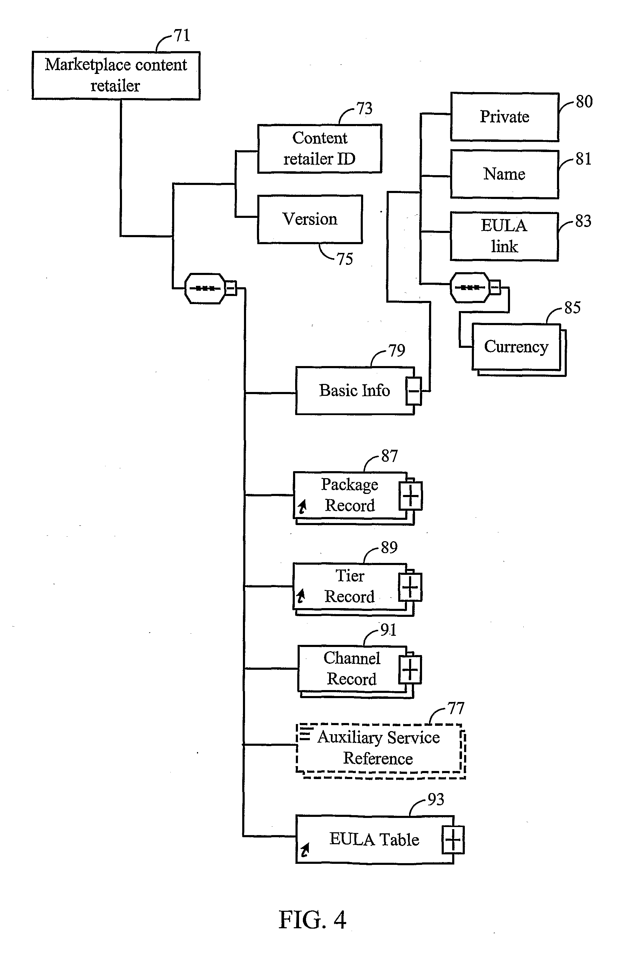

Referring to Fig. 4, for example, in several aspects of marketplace information 66 includes at least one marketplace content retailer record 71 associated with each content retailer 24, as identified by a content retailer identification 73. Further each record 71 for each content retailer identification 73 includes a version identifier 75. Version identifier 75 is associated with a given marketplace content retailer record 71 identifies the particular set of attribute and element values transported by the marketplace content retailer record, thereby allowing it to be identified as a copy of another marketplace content retailer record.

Each marketplace content retailer record 71 provides information specific to a given content retailer 24. Notably, this information may include one or more auxiliary service references 77. At this level, auxiliary service reference 77 dictates a specific auxiliary service 50 and/or a specific auxiliary presentation 48 for acquisition while accessing any packages 34, tiers 32, channels 26 and/or base services 16 associated with the given content retailer. It should be noted, however, that the corresponding records for each package 34, tier 32, channel 26 and/or base service 16 may also include an auxiliary service reference that is specific to that package 34, tier 32, channel 26 and/or base service 16. In several aspects, the auxiliary service reference within the record of each package 34, tier 32, channel 26 and/or base service 16 overrides auxiliary service reference 77 in marketplace content retailer record 71. In another aspect, auxiliary service reference 77 in marketplace content retailer record 71 overrides an auxiliary service reference within the record of each package 34, tier 32, channel 26 and/or base service 16. The details of an auxiliary service record identified by auxiliary service reference 77 will be discussed below.

Additionally, each marketplace content retailer record 71 may include basic information 79, such as a private content retailer indicator 80, a name 81 associated with the given content retailer and an End User License Agreement (EULA) link 83, which provides a reference to a EULA database. For example, private content retailer indicator 80 specifies if the given content retailer is a private content retailer, where information about a private content retailer and its associated packages, etc. is only available to predetermined users, and only those user subscribed to packages offered by a private content retailer may view the associated information. For example, in one non-limiting aspect, a private content retailer may be an enterprise or associated with an enterprise, such as a company, that utilizes it associated packages for private communications to employees of the company. Further, for example, EULA link 83 may be a universal resource identifier (URI). Further, each marketplace content retailer record 71 may include an identification of one or more currencies 85 supported by the respective content retailer.

Further, each marketplace content retailer record 71 may include one or more package records 87, one or more tier records 89, one or more channel records 91, and one or more EULA tables 93 associated with the respective content retailer 24.

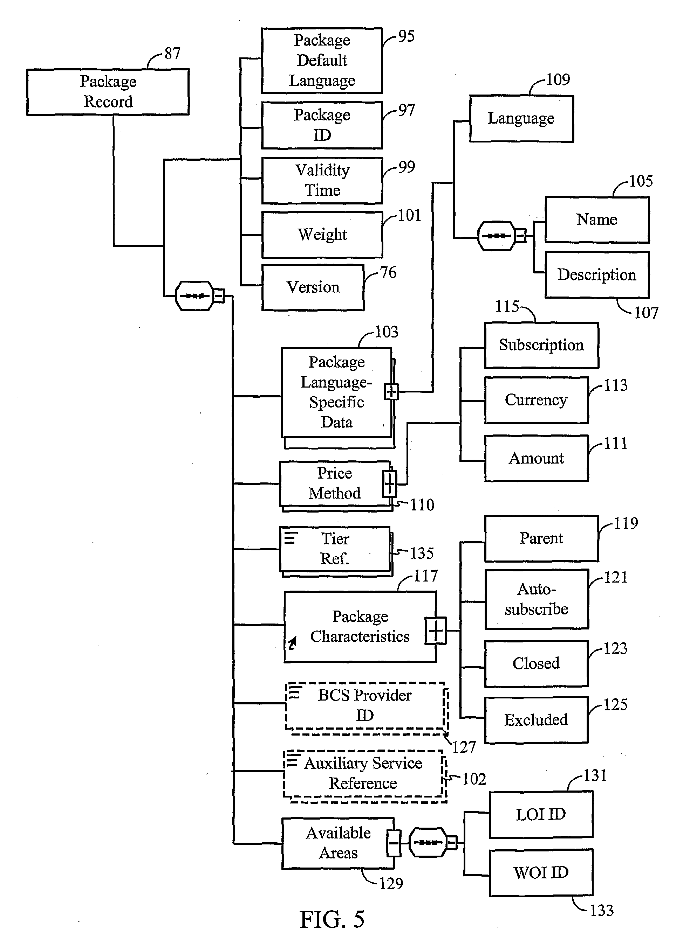

Referring to Figs. 4 and 5, each package record 87 provides information on: packages 34 offered by the respective content retailer; subscription options for each package 34; and a set of tiers 32 that make up the given package 34. In particular, in several aspects, each package record 87 includes attributes such as: a package default language 95 that identifies a default language to be used for services 16 in the respective package if the device user's preferred language is not available; a unique package identifier 97 that distinguishes the package from all other packages offered by the same content retailer; a validity time 99 that defines a time at which the definition provided in the respective package record becomes valid, superseding the previous definition; a package weight 101 which is a value used by device 36 to determine the order in which the packages are presented to the user, for example, a package with a lower weight than another package is presented first, and the package weight for a given package may be a unique value among all content retailers; and version identifier 76, which serves the same purpose for package record 87 as does version identifier 75 (Fig. 4) associated with marketplace content retailer record 71,.

Notably, each package record 87 may include one or more auxiliary service references 102. At this level, auxiliary service reference 102 dictates a specific auxiliary service 50 and/or a specific auxiliary presentation 48 for acquisition while accessing any tiers 32, channels 26 and/or base services 16 associated with the given package. It should be noted, however, that the corresponding records for each tier 32, channel 26 and/or base service 16 may also include an auxiliary service reference that is specific to that tier 32, channel 26 and/or base service 16. In several aspects, the auxiliary service reference within the record of each tier 32, channel 26 and/or base service 16 overrides auxiliary service reference 102 in package record 87. In another aspect, auxiliary service reference 102 in package record 87 overrides an auxiliary service reference within the record of each tier 32, channel 26 and/or base service 16. The details of an auxiliary service record identified by auxiliary service reference 102 will be discussed below.

Additionally, each package record 87 further includes one or more package language specific data 103, including a package name 103 and a package description 105 associated with one or more specified languages 107. Further, each package record 87 includes one or more package price methods 109, which specifies an amount or cost 111 of the package, in a given currency 113, associated with a given subscription method 115, such as monthly, weekly, etc.

Additionally, each package record 87 further includes package characteristics 117, identifying the given package as a parent package 119, an autosubscribe package 121, a closed package 123 or an excluded package 125. In several aspects, if a given package is associated with a parent package 119, then the package may be considered an "add-on" package, where the user may only subscribe to the package if the user is already subscribed to at least one associated parent package. In several aspects, if the given package is an autosubscribe package 121, then it may be considered automatically part of another package, and a user is automatically subscribed to it when they subscribe to the other package. In several aspects, if the given package is a closed package 123, then new subscriptions are no longer being accepted for the given package. In several aspects, if the given package is an excluded package 125, then a given user is not permitted to subscribe to the package. For example, similar "add-on" packages may be associated with two different parent or root packages, and a subscriber to one root package may be excluded from subscribing to the add-on packages associated with the other parent or root package to avoid having the subscriber to pay for an additional root package subscription. Thus, in general, all parent packages may be mutually exclusive with respect to their associated set of add-on packages.

Further, each package record 87 may include one or more BCS provider identifiers 127, which specify a list of BCS providers associated with the given package. Also, each package record 87 may include data on an available area 129 associated with where the given package is available. In several aspects, for example, available area 129 includes one or more local-area grouping of infrastructure (LOI) identifiers 131 and/or one or more wide-area grouping of infrastructure (WOI) identifiers 133. Each LOI identifier 131 identifies a logical grouping of the infrastructure deployed to provide MDS 12 with network coverage in a specific local area. Similarly, each WOI identifier 133 identifies a logical grouping of the infrastructure deployed to provide MDS 12 with network coverage in a specific wide area.

Additionally, referring to Figs. 5 and 6, each package record 87 further includes one or more tier references 135, which each identify a tier record 137 associated with the given package. Each tier record 137 includes a unique tier identifier 139 that distinguishes the tier from all other tiers from the content retailer, and a validity time 141, which defines a time at which the definition provided in the given tier record becomes valid, superseding the previous definition.

Notably, each tier record 137 may include one or more auxiliary service references 143. At this level, auxiliary service reference 143 dictates a specific auxiliary service 50 and/or a specific auxiliary presentation 48 for acquisition while accessing any channels 26 and/or base services 16 associated with the given tier. It should be noted, however, that the corresponding records for each channel 26 and/or base service 16 may also include an auxiliary service reference that is specific to that channel 26 and/or base service 16. In several aspects, the auxiliary service reference within the record of each channel 26 and/or base service 16 overrides auxiliary service reference 143 in tier record 137. In another aspect, auxiliary service reference 143 in tier record 137 overrides an auxiliary service reference within the record of each channel 26 and/or base service 16. The details of an auxiliary service record identified by auxiliary service reference 143 will be discussed below.

Further, each tier record 137 may include one or more channel references 145 that identify one or more channels 26 associated with the given tier. For example, channel reference 145 identifies a channel record 91 (Fig. 4) for each channel 26.

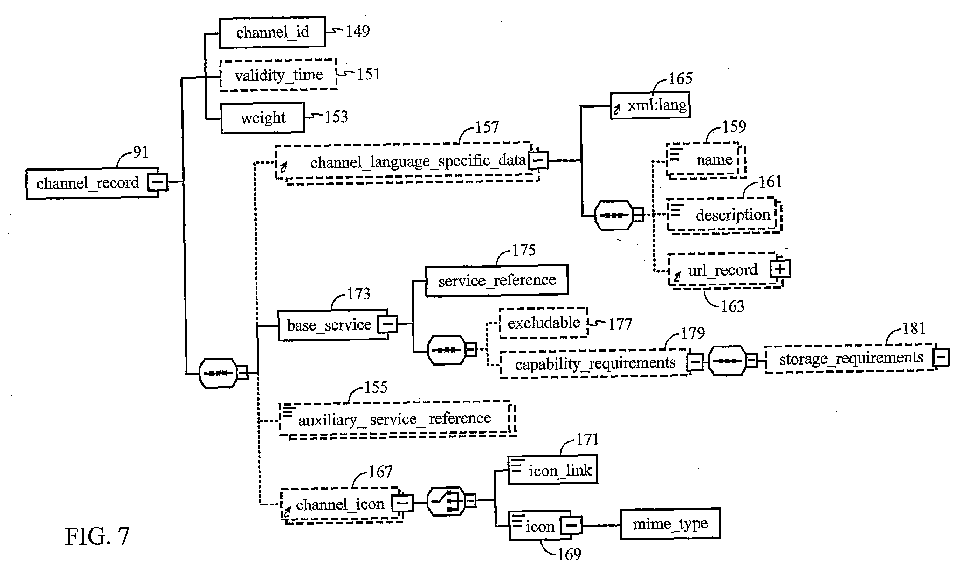

Referring to Figs. 4 and 7, each channel record 91 includes a unique channel identifier 149 that distinguishes the given channel from all other channels from the content retailer, and a validity time 151, which defines a time at which the definition provided in the given channel record becomes valid, superseding the previous definition. Further, each channel record 91 may include a channel weight 153, which is a value used by device 36 to determine the order in which the channels are presented to the user, such as in a list presented by MPG 40. For example, a channel with a lower weight than another channel is presented first, and the channel weight for a given channel may be a unique value among all content retailers.

Notably, each channel record 91 may include one or more auxiliary service references 155. At this level, auxiliary service reference 155 dictates a specific auxiliary service 50 and/or a specific auxiliary presentation 48 for acquisition while accessing any base services 16 associated with the given channel. It should be noted, however, that the corresponding records for each base service 16 may also include an auxiliary service reference that is specific to that base service 16. In several aspects, the auxiliary service reference within the record of each base service 16 overrides auxiliary service reference 155 in channel record 91. In another aspect, auxiliary service reference 144 in channel record 91 overrides an auxiliary service reference within the record of each base service 16. The details of an auxiliary service record identified by auxiliary service reference 155 will be discussed below.

Additionally, each channel record 91 further includes one or more channel language specific data 157, including a package name 159, a package description 161, and one or more universal resource locator (URL) records 163 associated with a specified language 165. In several aspects, if channel language specific data 157 is present, then its contents supersede a set of service language specific data for the respective base service in the specific language 165.

Further, each channel record 91 may include a channel icon 167, which may include an icon graphic file 169 or an icon URI reference 171 that identifies a resource which provides an icon image for the corresponding channel 26. The URI may point to an external reference, such as an HTML link, or to an internal file.

Additionally, each channel record 91 may include a base service record 173, which includes a service reference 175 that identifies the base service 16 that the given channel 26 customizes. Further, base service record 173 optional characteristics that are channel-specific, such as an excludability identifier 177 and channel-specific capability requirements 179. If the given channel is indicated as being excludable by excludability identifier 177, then a user subscribing to the given package 34 providing access to the given channel 26 is permitted to suppress access to the channel and display of channel-related information in the device, such as wireless device 36. Capability requirements 179 define storage capability requirements 181, or device memory required, for the given channel if the base service is not a real-time service. If a user of a device, such as wireless device 36, desires to subscribe to the channel but the device does not meet the capability requirements 181, and if the channel is not excludable, then the user may not be permitted to subscribe to the package 34 containing the channel 26, and/or directly to the channel 26. Alternatively, a user may elect to exclude certain channels in a given package to enable the user to subscribe to the package. This may be useful, for example, when a user is not interested in all of the channels offered in a given package, yet still wants to receive the package.

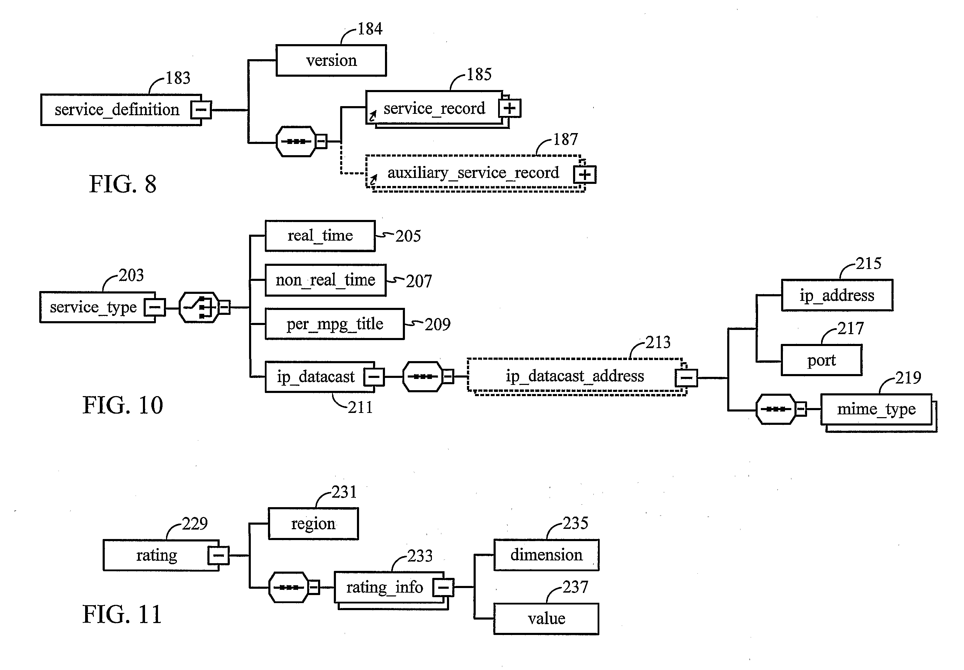

Referring to Figs. 3 and 8, in several aspects, service information 68 includes a service definition message 183 that identifies one or more service records 185 and which may include one or more auxiliary service records 187. Further, each service definition message 183 includes version 184, as discussed above. Service definition message 183 defines those content attributes of a service which are shared between channels 26 offered by different content retailers 24 that use the service as a base service 16. Service definition message 183 also defines default content attributes that may be used in the event that a content retailer 24 does not define customized values for the corresponding attributes in the respective channel record 91.

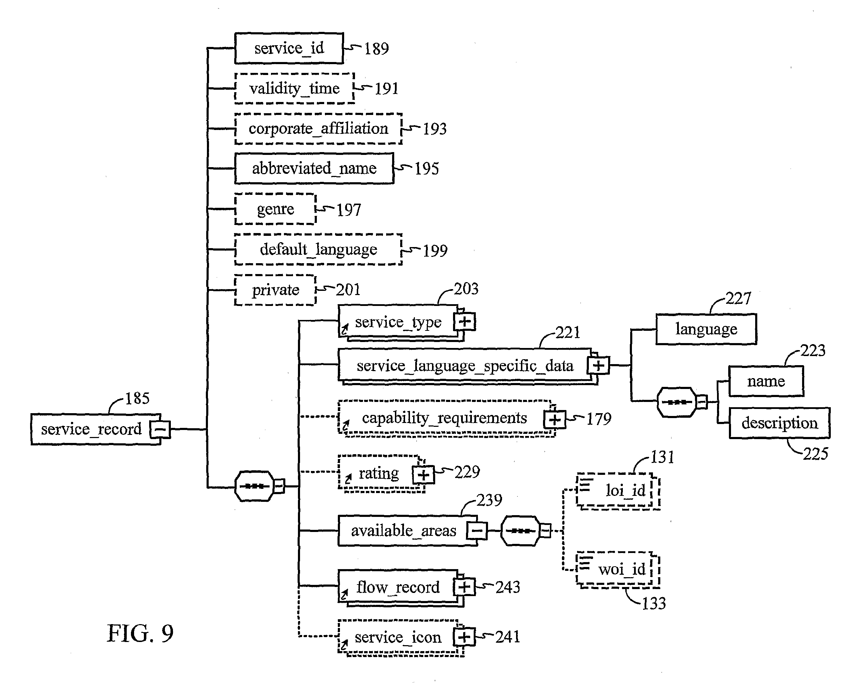

Referring to Fig. 9, in several aspects, each service record 185 includes: a service identifier 189 to that distinguishes the given service from other services, where the service identifier 189 identifies the specific base service 16; a validity time 191 that defines a time at which the definition provided in the respective service record becomes valid, superseding the previous definition; a corporate affiliation 193, which defines a corporate name associated with the service; an abbreviated name 195 that defines a short name for the service, which may be displayed to a user of a device on which the service is being accessed; a genre 197 that describes the semantic class of content provided by the service, such as comedy, documentary, drama, mystery, etc.; a default language 199 that identifies a default language to be used for the service if the device user's preferred language is not available, where, in several aspects, default language 199 may be overridden by package default language 95 (Fig. 5) of the corresponding package record 87; a private service indicator 201, which indicates if the service is only available through a private content retailer, as indicated by private content retailer indicator 80 (Fig. 4) such that information about the service shall not be available to users who are not permitted to access the associated private content retailer.

Additionally, referring to Figs. 9 and 10, each service record 185 includes a service type 203 that indicates the temporal nature of the content provided by the service. In several aspects, for example, service type 203 may be a real-time service 205, a non real-time service 207, a "per media presentation guide (MPG) title" service 209, or a datacast service 211. Real-time service 205 includes real-time streaming media. Non real-time service 207 includes non real-time media downloaded as clip files. Per MPG title service 209 includes real-time streaming media, non real-time media downloaded as clip files, or a combination of the two as determined from the media presentation guide 40. Datacast service 211 includes Internet Protocol (IP) packets of data, which are associated with IP datacast information 213, such as an IP address 215 and port 217, and which also may be associated with one or more Multipurpose Internet Mail Extensions (MIME) types 219 for the IP datacast presentation. For example, IP address 215 may be an IPv4 or an IPv6 multicast address, and IP port 217 may be an IPv4 or an IPv6 port. MIME type 219 defines the type of media offered over each IP address and port.

Further, non real-time service 207 comprises non real-time presentations that may be files or clips which have been downloaded to the device, such as wireless device 36, before presentation to the user. The times at which the files are downloaded are advertised in advance through MPG 40 in one or more contact windows. Each contact window represents a timeframe within which, at any time, the device can initiate acquisition of the file.

In several aspects, for example, content retailer 24 and/or BCS provider 30 may limit viewing of the presentation to a specified presentation window, which is specified in MPG 40 as a start time and a duration associated with the given MPG title, which may be exactly as for a real-time presentation. However, in this case, in several aspects, the start and end times indicate the earliest and latest times that the user may begin to view the presentation. Unlike a real-time presentation, in this aspect, viewing can commence at any time within the presentation window. If the duration of the presentation is shorter than the presentation window, then the user may elect to view the presentation multiple times within the presentation window.

As a result of these characteristics, activity related to the distribution and viewing of the presentation may continue after the respective ends of the contact windows and the presentation windows. A device that initiates acquisition at the end of the contact window can still complete acquisition of the file. In order to allow the device to determine when an acquisition attempt has failed in this case, the definition of the contact window in MPG 40 also includes the contact duration attribute. For this reason, the end of the contact window may be separated from the start time of the presentation by at least the length of the contact duration.

Similarly, if a user elects to view a presentation at the end of the presentation window, the presentation can be viewed to its end, as determined by the duration of the presentation.

Further, referring to Fig. 9, each service record 185 includes one or more service language specific data 221, including a name 223 and a description 225 of the service associated with a specified language 227.

Also, each service record 185 includes one or more capability requirements 179, described above with regard to Fig. 7.

Additionally, each service record 185 includes one or more ratings 229, where each rating 229 defines the parental advisory information for the service. In several aspects, for example referring to Fig. 11, rating 229 may include a rating region 231 and corresponding additional rating information 233, such as a rating dimension 235 and a rating value 237. Rating region 231 specifies the geographical region in which rating 229 applies. There may be a separate rating 229 for each rating region 231 in which the associated base service 16 is offered. Rating dimension 235 identifies an aspect of the rating system that applies to the associated rating it region 231. For example, in the United States Region rating scheme, rating dimension 235 may be a description such as "violence," "language," etc. In other regions, rating dimension 235 may represent different descriptions. Rating value 237 specifies a value associated with the corresponding rating dimension 235, and thereby helps to quantify and compare relative ratings.

Further, each service record 185 may further include an available area 239, which may include a list of LOI identifiers 131 and WOI identifiers 133, as discussed above with regard to Fig. 5.

Additionally, each service record 185 may include a service icon record 241, which may include an icon graphic file or an icon URI reference that identifies a resource which provides an icon image for the corresponding service 16. The URI may point to an external reference, such as an HTML link, or to an internal file.

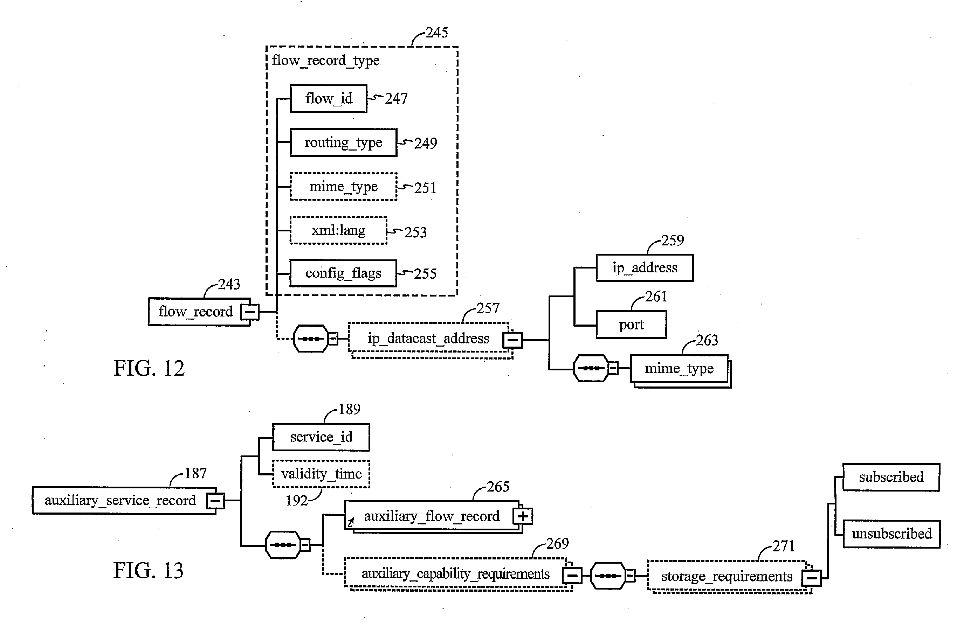

Further, referring to Figs. 9 and 12, each service record 185 may also include a flow record 243 for each flow 45 used to transport a component of the service. Each flow record 243 includes a flow record type 245 that defines: a unique flow identifier 247; a flow routing type 249, which defines the transport layer routing information as video, audio, timed text, non real-time bearer, non real-time signaling, IP datacast, or some other predetermined type; a flow MIME type 251, which is used to define the type of media offered in the flow; a flow language 253, which specifies a language used for the service component transported by the flow; and flow configuration flags 255, which may be flags as specified in the Multicast Device Network Interface (MDNI) standard 80-T0535-1, Release 3.0 Multicast Device Network Interface Specification, Rev. A, 2005, hereby incorporated by reference.

Additionally, if the flow transports IP datacast content, then flow record 243 may include an IP datacast address record 257 that specifies an IP address 259 and port 261, and which also may be associated with one or more MIME types 263 for the IP datacast presentation.

Further, referring to Figs. 8 and 13, in several aspects, auxiliary service record 187 includes: a service identifier 189 to that distinguishes the given service from other services, where the service identifier 189 identifies the specific auxiliary service 50; a validity time 192 that defines a time at which the definition provided in the respective service record becomes valid, superseding the previous definition.

Further, one example of a use for validity time 192, or any other validity time described herein, is in the situation where there is a dependency between SI records which are carried by different SI messages. For example, in one scenario, a new package is being added and that package contains a new channel. Further, the new channel refers to a new service. A common validity time may be set in the package record describing the new package, the channel record describing the new channel and the service record describing the new service. This validity time would be set some time beyond the time when the SI messages carrying these records starts transmission to increase the probability that devices have received them all before these records take effect. Without the validity time feature a device that receives one of the messages but not one or more of the other messages would have an inconsistent set of SI records. That is, the correctly received package record might refer to a channel record that the device has not yet received, or the correctly received channel record might refer to a service record that the device has not yet received.

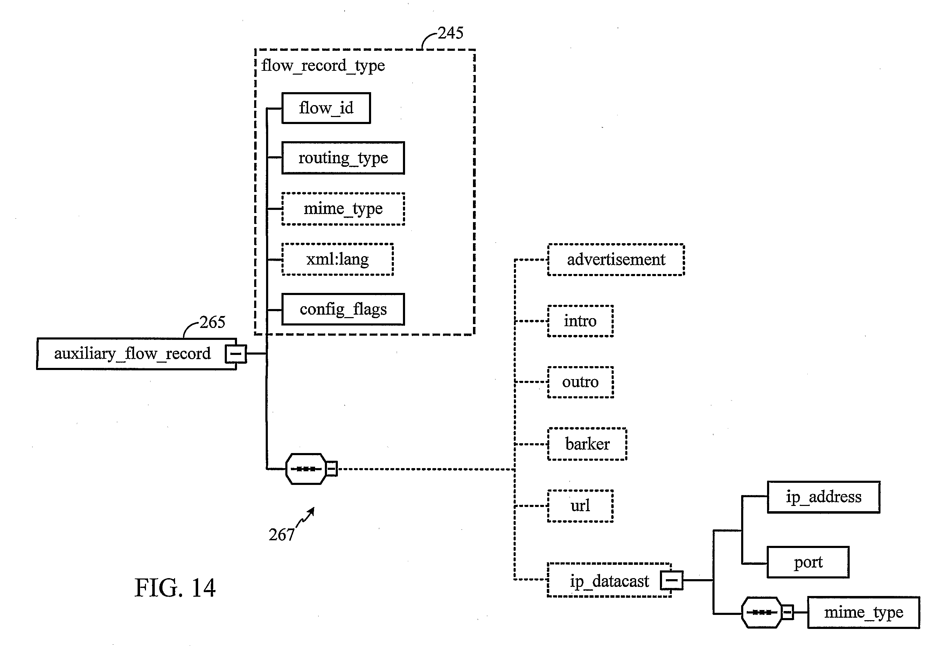

Additionally, referring to Figs. 13 and 14, each auxiliary service record 187 includes one auxiliary flow record 265 for each flow used to transport a component of the auxiliary service 16. In several aspects, for example, each auxiliary flow record 265 may include: a flow record type 245, as described above with regard to Fig. 12, but specific to the auxiliary flow; and a flow content type 267, which provides an indication of the content of the flow. In several aspects, flow content type 267 indicates one of the following types of content: an advertisement, an intro, an outro, a barker, URL information, and an IP datacast.

Referring back to Fig. 13, each auxiliary service record 187 may further include an auxiliary capability requirement 269 for the auxiliary service 50 if the service is not a real-time service. Auxiliary capability requirement 269 may include one or more storage requirements 271, which define a maximum amount of memory required for a device to support access the auxiliary service. Storage requirements 271 may vary depending on whether or not the user is subscribed to the associated base service.

Additionally, referring to Figs. 3 and 15, in several aspects, MPG information 70 further includes an MPG block 273, which defines the content or presentations 42, 48 available in a fixed window of time. MPG block 273 may include attributes that allow individual presentations 42 associated with base service 16, which are defined by MPG title records 275, to be customized with specific auxiliary services 50 and/or auxiliary presentations 48. For example, each MPG block message 273 defines: a start time 277, which is the earliest time covered by the MPG block and corresponds to the end of the interval covered by the previous MPG block, and a version 278, as defined above; MPG title records 275 for all MPG titles, i.e. presentations 42 and their associated media presentation guide information, shown during the MPG block duration, where each MPG title record 275 completely describes all applicable attributes of an MPG title; contact window information 279 for all non real-time presentations downloaded during the MPG block duration; channel customization records 281 defining customized adaptations for each MPG title for respective ones of the various channels 26 through which the services 16 may be accessed; and, blackout information 283 defining the region or regions in which the MPG title is to be blacked out.

Notably, referring to Fig. 16, each channel customization record 281 may identify one or more auxiliary presentations 48 associated with each channel reference 283, which identifies a specific channel 26 that is to be customized, along with an MPG title customization record 285, which provides additional title-specific customizations of any and/or all attributes associated with the display and playing of a given presentation.

Therefore, auxiliary services 50 can be associated with any level of media aggregation: per presentation 42, per service 16, per channel 26, per tier 32, per package 34, and per content retailer 24. Devices subscribed to the presentation, service, channel, tier, package and/or content retailer (as appropriate) thereby monitor the auxiliary service for content. Thus, the content delivered to the device may thereby be customized via the auxiliary service for each content retailer at any level of media delivery.

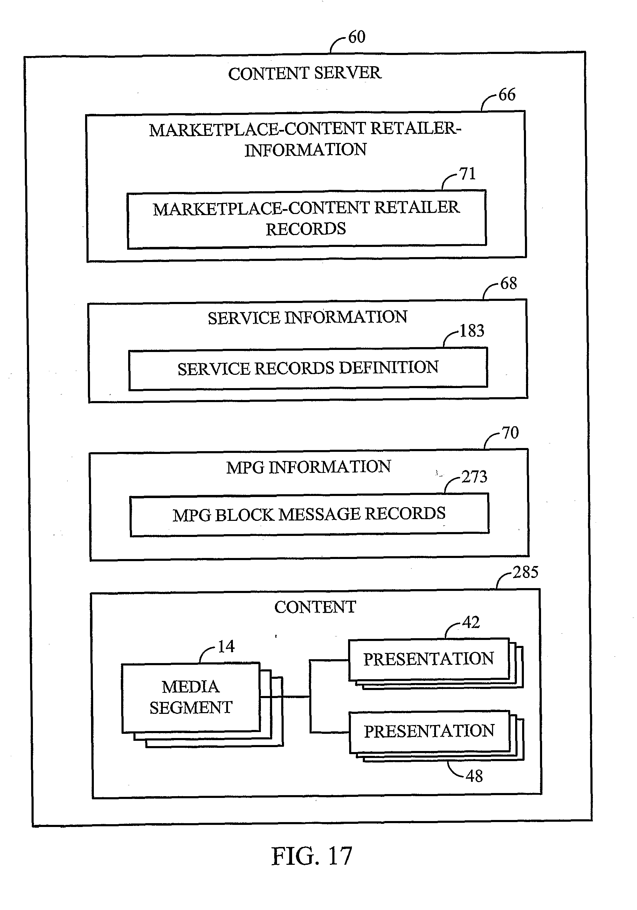

Referring to Fig. 17, the previously mentioned one or more content servers 60 therefore store the above-defined MPG block message records 273 as MPG information 70, along with marketplace-content retailer records 66 and associated marketplace content retailer records 71, service information 68 and associated service definition records 183, and content 246, which includes media segments 14 and/or presentations 42, 48.

Thus, referring to Figs. 1 and 17, marketplace-content retailer records 66 comprise the data and information associated with the respective packages 34, tiers 32, and channels 26 of each content retailer 24 and/or BCS provider 30 of system 10. Service definition records 183 comprise the data and information associated with the respective base services 16 and auxiliary services 50 of system 10. Further, MPG block message records 273 comprise the data and information associated with the specific presentations and services associated with each channel 26 associated with each content retailer 24 and/or BCS provider 30.

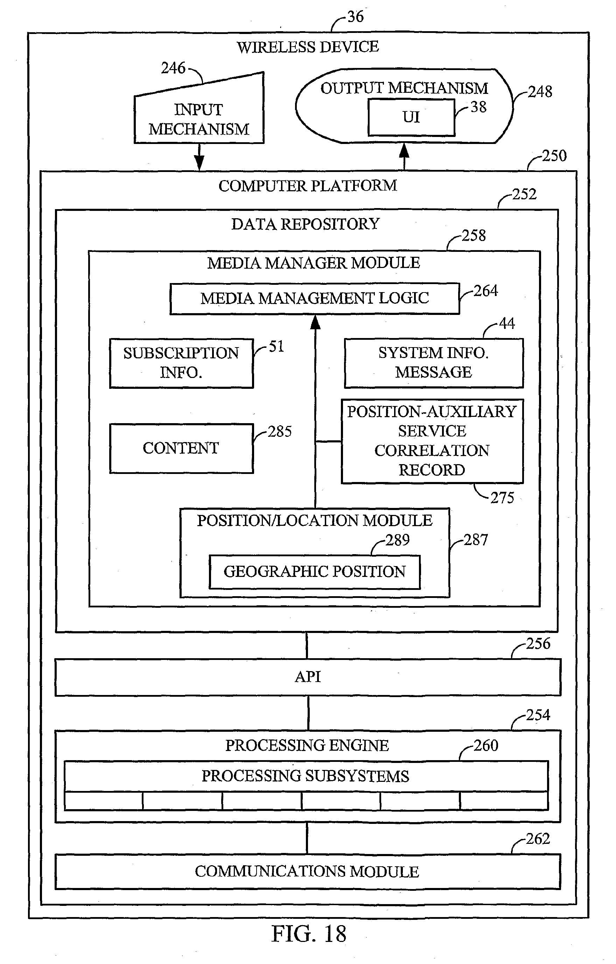

Referring to Fig. 18, in several aspects, wireless device 36 has input mechanism 246 for generating inputs into wireless device, and output mechanism 248 for generating information for consumption by the user of the wireless device. For example, input mechanism 246 may include a mechanism such as a key or keyboard, a mouse, a touch-screen display, voice recognition module, etc. Further, for example, output mechanism 248 may include user interface 38, which may be a display, an audio speaker, a haptic feedback mechanism, etc.

Further, wireless device 36 has computer platform 250 that can transmit data across wireless network 46, and that can receive and execute software applications and display data transmitted from MDS 12 or another computer device connected to wireless network 46. Computer platform 250 includes a data repository 252, which may comprise volatile and nonvolatile memory such as read-only and/or random-access memory (RAM and ROM), EPROM, EEPROM, flash cards, or any memory common to computer platforms. Further, data repository 252 may include one or more flash memory cells, or may be any secondary or tertiary storage device, such as magnetic media, optical media, tape, or soft or hard disk.

Further, computer platform 250 also includes a processing engine 254, which may be an application-specific integrated circuit ("ASIC"), or other chipset, processor, logic circuit, or other data processing device. Processing engine 254 or other processor such as ASIC may execute an application programming interface ("API") layer 256 that interfaces with any resident programs, such as a media manager module 258 (discussed below) and/or a position/location module 287 (discussed below), in data repository 252 of the wireless device. API 256 is a runtime environment executing on the respective wireless device. One such runtime environment is Binary Runtime Environment for Wireless^{®} (BREW^{®}) software developed by Qualcomm, Inc., of San Diego, California. Other runtime environments may be utilized that, for example, operate to control the execution of applications on wireless computing devices.

Processing engine 254 includes various processing subsystems 260 embodied in hardware, firmware, software, and combinations thereof, that enable the functionality of wireless device 36 and the operability of the wireless device on wireless access network 46. For example, processing subsystems 260 allow for initiating and maintaining communications, exchanging data, and executing multimedia presentations. In several aspects, such as in a wireless communication device, processing engine 254 may include one or a combination of processing subsystems 260, such as: sound, nonvolatile memory, file system, transmit, receive, searcher, layer 1, layer 2, layer 3, main control, remote procedure, handset, power management, diagnostic, digital signal processor, vocoder, messaging, call manager, Bluetooth^{®} system, Bluetooth^{®} LPOS, position determination, position engine, user interface, sleep, data services, security, authentication, USIM/SIM, voice services, graphics, USB, multimedia such as MPEG, GPRS, etc. For the disclosed aspects, processing subsystems 260 of processing engine 256 may include any subsystem components that interact with applications executing on computer platform 250. For example, processing subsystems 260 may include any subsystem components which receive data reads and data writes from API 256 on behalf of media manager module 258.

Computer platform 250 may further include a communications module 262 embodied in hardware, firmware, software, and combinations thereof, that enables communications among the various components of the wireless device 36, as well as between wireless device 36 and wireless access network 46. For example, communications module 262 may include a transceiver module for wireless communications with MDS 12 and/or wireless access network 46.

Media manager module 258 operates to manage media subscription, media receipts, and media playing/viewing activities on wireless device 36. Media manager module 258 may include any hardware, software, firmware and/or other set of executable instructions operable to manage the media-related activities on wireless device 36. Further, media manager module 258 and/or data repository 252 store SI message 44 and its associated content information and the content for viewing/playing on user interface 38. In several aspects, media manager module 258 includes media management logic 264 that provides the capability to receive, store, provide access to and play/display media-related information on wireless device 36. For example, media management logic 264 operates to parse SI message 44 and display MPG 40 on user interface 38 and/or provide a view of a channel 26, including presenting real-time and non-real-time content. Similarly, media management logic 264 operates to manage subscriptions to packages 34 with content retailers 24 and/or BCS providers 30, and store the associated subscription information 51. For example, subscription information 51 may be any information, such as subscription identifications, keys, etc., stored on device 36 relating to subscriptions to or activations on wireless networks and/or subscriptions to multimedia packages 34. Further, media management logic 264 operates to manage the acquisition and storage, including memory management functions, associated with a non real-time presentation based on the respective contact window, as well as managing the playing/displaying of the content. Additionally, media management logic 264 operates with communications module 262 to receive and play real-time presentations and datacast presentations.

For example, in several aspects, device 36 may subscribe to or be activated on wireless access network 46. Typically, an activation of device 36 onto network 46 limits the device to receiving communications and/or multimedia service from one content retailer 24 and/or BCS provider 30. Further, this activation allows device 36 to receive a broadcast including SI message 44 (Fig. 1), even if the device is not subscribed to any packages 34. Because of being broadcast, in several aspects, SI message 44 includes all of the MPG block records 72 defined by all of the content retailers. Further, in this case, SI message 44 and/or its corresponding flow 45 may include all of the content for a given schedule of programming, i.e. all of the base services and base service presentations and all of the auxiliary services and auxiliary presentations. In this example, upon receiving SI message 44, media manager module 258 is operable to filter out all records and/or content not relevant to the device based on the content-retailer associated with the device, and further based on the packages subscribed to by the device. In this manner, media manager module 258 constructs MPG 40 and presents presentations 42, 48 on device 36, and optimizes review of SI message 44 and/or content in flow 45 by only addressing records and/or content relevant to the device.

Additionally, in an optional aspect, wireless device 36 may further include position/location module 287 on computer platform 250. Position/location module 287 may include any hardware, software, firmware and/or other set of executable instructions operable to obtain and/or determine an actual or estimated geographic position 289 of wireless device 36. Position/location module 287 is operable to obtain and/or determine geographic position 289 through communication with a remotely-located position determination system 47 (see Fig. 1). Further, position/location module 287 may operate in combination with media manager module 258 to present a given auxiliary service 50 and/or set of auxiliary presentations 48 to wireless device 36 based on the given geographic position 289 of the wireless device.

For example, wireless device 36 may receive a position-auxiliary service correlation record 291, from MDS 12 and/or content retailer 24 and/or BCS provider 30, which references one or a plurality of geographic areas with one of a plurality of auxiliary services and/or auxiliary presentations. Further, media management logic 264 may be operable to determine within which geographic area the given geographic position 289 is located, and thus reference the corresponding set of auxiliary services 50 and/or auxiliary presentations 48 to present to the user.

Position determination system 47 (Fig. 1) may comprise one or a combination of orbiting systems and terrestrial-based systems, such as geographic positioning system (GPS) and/or a network-based location module. One example of such a geographic information system includes the QPoint™ Positioning Software and gpsOne^{®} hybrid Assisted GPS wireless location technology available from Qualcomm, Inc., of San Diego, California. Position determination system 47 is not limited thereto, however, and includes any other system or tool used to gather, transform, manipulate, analyze, and produce information relating to the geographic position 289 of the respective wireless device.

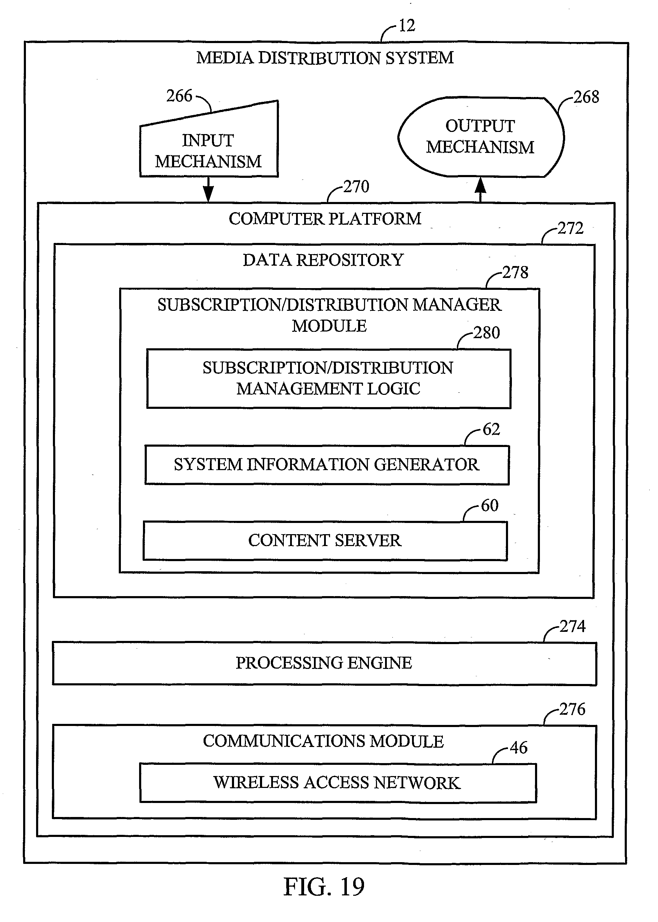

Referring to Fig. 19, in several aspects, MDS 12 may comprise at least one of any type of hardware, software, firmware, server, personal computer, mini computer, mainframe computer, or any computing device either special purpose or general computing device. Further, there can be separate servers or computer devices and/or networks associated with MDS 12 that work in concert to receive, manipulate and provide data in usable formats to parties, and/or to provide a separate layer of control in the data flow between devices and networks and MDS 12.

MDS 12 has input mechanism 266 for generating inputs into MDS 12, and output mechanism 268 for generating information for consumption by an operator of MDS 12. For example, input mechanism 266 may include a mechanism such as a key or keyboard, a mouse, a touch-screen display, voice recognition module, etc. Further, for example, output mechanism 268 may be a display, an audio speaker, a haptic feedback mechanism, etc. Additionally, input mechanism 266 may be a remote device, such as a remote computer or workstation, which has access to MDS 12. In several aspects, for example, input mechanism 266 may be utilized by an operator to enter service attributes 20, custom attributes 28, and for establishing and/or manipulating information associated with presentations 42, 48, channels 26, tiers 32 and packages 34.

Further, MDS 12 has one or a plurality of resident or distributed computer platforms 270 that can receive and transmit data, and that can receive and execute software applications and display data. Computer platform 270 includes a data repository 272, which may comprise volatile and nonvolatile memory such as read-only and/or random-access memory (RAM and ROM), EPROM, EEPROM, flash cards, or any memory common to computer platforms. Further, data repository 272 may include one or more flash memory cells, or may be any secondary or tertiary storage device, such as magnetic media, optical media, tape, or soft or hard disk. In several aspects, for example, data repository 272 includes the one or more content servers 60.

Further, computer platform 270 also includes a processing engine 274, which may be an application-specific integrated circuit ("ASIC"), or other chipset, processor, logic circuit, or other data processing device for carrying out executable instructions.

Computer platform 270 may further include a communications module 276 embodied in hardware, firmware, software, and combinations thereof, that enables communications among the various components of MDS 12, as well as between MDS 12 and wireless device 36. For example, communications module 276 includes wireless access network 46. Further, for example, communications module 276 may include a transceiver module for wireless communications with wireless device 36 and/or wireless access network 46.

Further, a subscription/distribution manager module 278 resides on computer platform 270 which operates to manage all of the media distribution functions described herein performed by MDS 12. Subscription/distribution manager module 278 may include any hardware, processors, software, firmware, and/or other set of executable instructions operable to manage the media-related activities on MDS 12. Further, in several aspects, subscription/distribution manager module 278 includes subscription/distribution management logic 280 that provides MDS 12 with the capability to receive, store, manipulate, provide access to and distribute content and content-related information. For example, subscription/distribution management logic 280 operates to receive content and content-related information, as well as content retailer-specific information, such as customization information, auxiliary services, auxiliary presentations, channel information, tier information and package information. Further, subscription/distribution management logic 280 is operable to receive, process and transmit subscription related information, such as subscription requests, the corresponding approvals or denials, and the management of digital rights based on an approved subscription request.

Additionally, subscription/distribution manager module 278 may include SI generator 62. As discussed above, SI generator 62 is operable to gather the various records and definitions entered into MDS 12 and combine them into a message, such as SI message 44, that may be broadcast, multicast, unicast or otherwise transmitted to one or more devices. For example, SI generator 42 may have an interface, such as wireless access network 46, to the one or more devices. In general, the interface may be a physical connection and/or a wireless connection using air interface techniques such as code division multiple access ("CDMA"), wideband code division multiple access ("WCDMA"), universal mobile telecommunications system ("UMTS"), advanced mobile phone service ("AMPS"), time division multiple access ("TDMA"), frequency division multiple access ("FDMA"), orthogonal frequency division multiple access ("OFDMA"), global system for mobile communications ("GSM"), single carrier ("1X") radio transmission technology ("RTT"), evolution data only ("EV-DO") technology, general packet radio service ("GPRS"), enhanced data GSM environment ("EDGE"), high speed downlink data packet access ("HSPDA"), analog and digital satellite systems, and any other technologies/protocols that may be used in at least one of a wireless communications network and a data communications network.

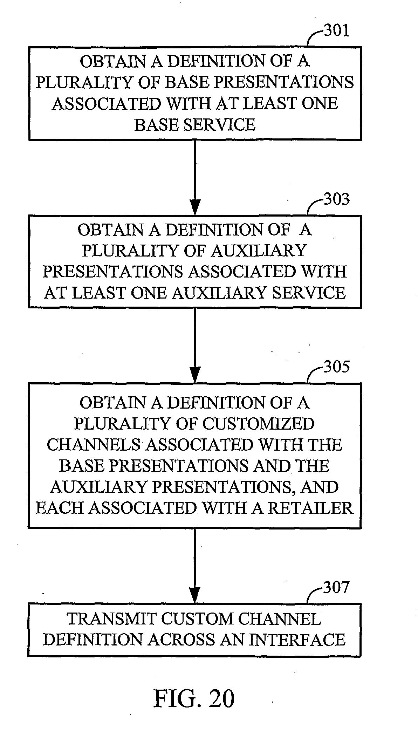

In operation, referring to Fig. 20, several aspects of a method of customizing a channel comprises obtaining a definition of a plurality of base presentations associated with at least one base service (Block 301). For example, in several aspects, MDS 12 obtains service attributes 20, for example from a content provider or from a local database, which define each base service 16 and each base presentation 42 with the base service. Additionally, for example, service attribute information 20 may be defined within service information 68 (Fig. 3) of SI message 44, and as identified for each service record 185 (Fig. 9) as referenced by each base service record 173 (Fig. 7) of each channel record 91 (Fig. 7). Further, for example, in several aspects, MDS 12 may receive media segments 14 that define one or more presentation 42 that form a portion of base service 16 from one or more content providers 18. This content may be stored on one or more content servers 60, as in the case of non real-time content, and/or may be transmitted through a network associated with MDS 12, as in the case of real-time content. Alternately, MDS 12 may receive a reference to a location from which the presentation may be retrieved and/or from which the presentation may be forwarded to another destination.

Further, the method includes obtaining a definition of a plurality of auxiliary presentations associated with at least one auxiliary service (Block 303). For example, in several aspects, MDS 12 may obtain auxiliary service 50 (Fig. 1) that includes defining attributes and one or more auxiliary presentations 48, such as from a content provider or from a resident database. Additionally, for example, custom attribute information 22 may associated a given auxiliary presentation 48 with a given auxiliary service 50. Further, auxiliary services 50 may be defined within service information 68 (Fig. 2) of SI message 44, and more specifically, by auxiliary service record 187 (Fig. 13) of service record 185 (Fig. 9). Further, for example, in several aspects, MDS 12 may receive media segments 14 that define one or more auxiliary presentations 48 that form a portion of auxiliary service 50 from one or more content providers 18. For example, auxiliary presentations 48 and/or auxiliary service 50 may include one or more non-real-time and/or real-time pieces of content, including an intro, an outro, an advertisement, a barker, a URL, and an IP datacast. This content may be stored on one or more content servers 60, as in the case of non real-time content, and/or may be transmitted through a network associated with MDS 12, as in the case of real-time content. Alternately, MDS 12 may receive a reference to a location from which the auxiliary presentation may be retrieved and/or from which the auxiliary presentation may be forwarded to another destination.

Additionally, the method includes obtaining a definition of a plurality of customized channels each associated with a base presentation and an auxiliary presentation, and each associated with a retailer (Block 305). For example, in several aspects, MDS 12 obtains custom attribute information 22 from each content retailer 24, or from a local database, and replaces base service attributes 20 with the custom attributes to define a retailer-customized channel 26. In particular, in several aspects, MDS 12 receives marketplace content retailer record 71 (Fig. 4), which defines one or more package records 87. Each package record 87 references one or more tier records 89 and/or channel records 91, as well as an auxiliary service reference 77. Each package, tier or channel may further define and/or reference an auxiliary service. Ultimately, each package record 87 defines a base service record 173 (Fig. 7) and an associated auxiliary service (defined at either the package, tier, channel, service and/or presentation level) that are combined to define each channel within the package.

Additionally, for example, in several aspects, MDS 12 transmits the custom channel definition across an interface, such as for eventual receipt by a multi-media-capable device (Block 307). For example, MDS 12 transmits SI message 44, which includes the definitions of the custom channel 26. Further, SI message 44 may include presentations 42 of base service 16 and presentations 48 of auxiliary service 50. In several aspects, device 36 filters the content based on the identity of the retailer through whom device 36 receives service, and combines the retailer-specific base service 16 and auxiliary service 50 to generate the retailer-customized channel 26.

In still another aspect, MDS 12 provides a transport flow 45 that includes at least some portion of SI message 44, at least some portion of base service 16, and at least some portion of auxiliary service 50. For example, MDS 12 may broadcast flow 45 at predetermined times, and/or upon receiving a request from a device. In this case, SI message 44 includes at least one channel record 91 that defines both a base service and an auxiliary service that customizes the base service. Further, in this case, a multimedia capable device, such as wireless device 36, receives flow 45 and generates the combination of presentation 42 and auxiliary presentation 48 as dictated in channel record 91.

In a similar case, flow 45 may include one or more of a marketplace content retailer record 71, and/or a package record 87, and/or a tier record 137, and/or a service definition 183, and/or an MPG block 273, and/or a channel customization record 281, and/or an MPG title customization record 285, and at least one of these records may define the customized combination of base service 16 and auxiliary service 50. Alternatively, MDS 12 may direct an associated device and/or network to generate flow 45 based on definitions contained within MDS 12.

In another aspect, distribution manager module 278 associated with MDS 12 executes distribution management logic 280 to provide a definition and media content to a media capable device. The media content may be real-time content, such as from a broadcast system, and/or non real-time content, such as from files in storage. Further, distribution manager module 278 generates the definition based on specified records that provide instructions for combining a given base presentation 42 and at least some portion of a given auxiliary presentation 48 to generate a customized presentation on user interface 38. In this case, the customized presentation comprises at least a portion of a channel, which is thereby considered a customized view of the base service. Further, the specified records that define the customized presentation are defined by a party providing the media, such as a content retailer 24 and/or a BCS provider 30.

Further, in an optional aspect, MDS 12 sends one or more position-auxiliary service correlation records 291, which may be defined by and associated with a specific content retailer 24 and/or BCS provider 30, to wireless device 36. In this optional aspect, record 291 may define, based on geographic position 289 of wireless device 36, at least a portion of one or more auxiliary presentations 48 to use to customize at least a portion of one or more base presentations 42 provided to wireless device 36 to thereby define a given custom channel 26.

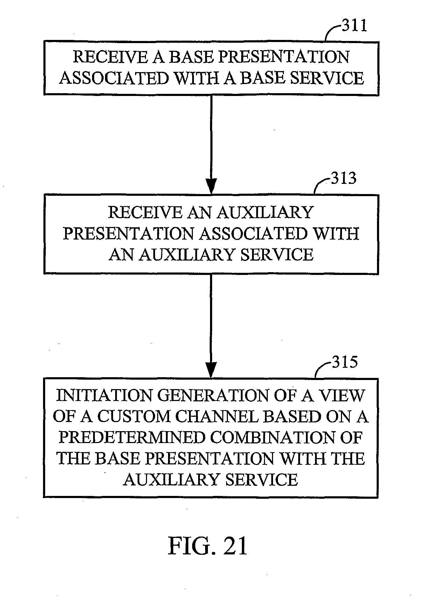

Referring to Fig. 21, in another aspect, a method for presenting customized content information comprises receiving a plurality of base presentations corresponding to at least one base service (Block 311). For example, in several aspects, a media-capable device, such as wireless device 36, receives base presentation 42 from MDS 12. In another aspect, a media-capable device, such as wireless device 36, receives at least a portion of one or more base services 16, which contains the respective base presentation 42, from MDS 12. In still another aspect, the device receives at least a portion of one or more flows 45, and each flow includes at least a portion of one or more base services 16, which include base presentation 42. Alternatively, MDS 12 may direct an associated device and/or network to transmit base presentation 42, and/or generate flow 45, including base presentation 42, based on definitions contained within MDS 12.

Further, the method includes receiving a plurality of auxiliary presentations corresponding to at least one auxiliary service (Block 313). For example, in several aspects, a media-capable device, such as wireless device 36, receives auxiliary presentation 48 from MDS 12. In another aspect, the device receives at least a.portion of one or more auxiliary services 50, which include auxiliary presentation 48, from MDS 12. In still another aspect, the device receives at least a portion of one or more flows 45, and at least one flow includes auxiliary presentation 48. Alternatively, MDS 12 may direct an associated device and/or network to generate flow 45, including auxiliary presentation 48, based on definitions contained within MDS 12.

Additionally, the method includes initiating generation of a custom channel based on a predetermined combination of the base presentation with the auxiliary presentation (Block 315). For example, in several aspects, a media-capable device, such as wireless device 36, combines a given base presentation 42 within at least a portion of a given auxiliary presentation 48 based on a retailer-specified definition of the custom channel, i.e. marketplace content retailer record 71 (Fig. 4) as discussed above. For example, the given portion of auxiliary presentation 48 may include real-time media and/or non-real-time media, such as an intro, an outro, an advertisement, a URL, and/or an IP datacast.

In another aspect, media manager module 258 on wireless device 36 executes media management logic 264 to combine base presentation 42 and at least some portion of auxiliary presentation 48 to generate a customized presentation on user interface 38. In this case, the customized presentation comprises at least a portion of a channel, and the customized presentation is defined by a party providing the media, such as a content retailer 24 and/or a BCS provider 30.

Further, in an optional aspect, wireless device 36 additionally receives one or more position-auxiliary service correlation records 291, which may be defined by and associated with a specific content retailer 24 and/or BCS provider 30, from MDS 12. Further, position/location module 287 on wireless device 36 may communicate with position determination system 47 to determine geographic position 289 of wireless device 36. Additionally, record 291 may define, based on geographic position 289 of wireless device 36, at least a portion of one or more auxiliary presentations 48 to use to customize at least a portion of one or more base presentations 42 provided to wireless device 36 to thereby define a given custom channel 26. For example, the above-described features allow for targeted, location-based advertising to the wireless device.

Thus, the described aspects allow a retailer to provide a retailer-specific, custom view of a base multimedia service, i.e. a custom channel, to enable branding, differentiation, and association of the custom channel with the retailer. Further, in an environment with multiple content retailers 24 and/or BCS providers 30 who are competing to provider multimedia services to a plurality of devices, the described aspects provide apparatus and methods for each of the plurality of retailer/providers to identify customizations to each one of a plurality of base services and/or base presentations, and to independently apply these customizations to produce sets of customized channels unique to each retailer/provider.

Additionally, it should be noted that the information contained in MPG block 72 (Fig. 2) may also be utilized to construct a custom subscription menu from which a user may review package information and subscribe to packages. For example, the information relating to the packages being offered for subscription may be based on service references 104 (Fig. 6) associated with MPG title records 80 (Fig. 6) of the given content retailer 24.

The various illustrative logics, logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

Further, the steps of a method or algorithm described in connection with the aspects disclosed herein may be embodied directly in hardware, in a software module executed by a processor, or in a combination of the two. A software module may reside in RAM memory, flash memory, ROM memory, EPROM memory, EEPROM memory, registers, a hard disk, a removable disk, a CD-ROM, or any other form of storage medium known in the art. An exemplary storage medium is coupled to the processor, such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

While the foregoing disclosure shows illustrative aspects, it should be noted that various changes and modifications could be made herein without departing from the scope of the described aspects as defined by the appended claims. Furthermore, although elements of the described aspects may be described or claimed in the singular, the plural is contemplated unless limitation to the singular is explicitly stated.

According to an aspect of the present invention, there is provided a method of customizing a channel, comprising:
obtaining a definition of a plurality of base presentations associated with at least one base service;
obtaining a definition of a plurality of auxiliary presentations associated with at least one auxiliary service; obtaining a definition of a plurality of customized channels each comprising a predetermined combination of at least one of the plurality of base presentations and at least one of the plurality of auxiliary presentations, each of the customized channels associated with one of a plurality of retailers operable to provide multimedia service to a device; and
transmitting the defined plurality of customized channels to the device

Obtaining a definition of a plurality of customized channels may further comprise obtaining a definition of a retailer-specific association between at least a portion of the auxiliary service and at least a portion of the base service.

The method may further comprise combining the definition of the plurality of base presentations, the definition of the plurality of auxiliary presentations, and the definition of the plurality of customized channels into a message.

Obtaining a definition of a plurality of customized channels may further comprise obtaining a definition of a combination of at least a portion of the base presentation with at least a portion of the auxiliary presentation based on the retailer-specific association.

The method may further comprise transmitting the base presentation, the auxiliary presentation, and the defined plurality of customized channels to the device.

The auxiliary presentation may comprise at least one of a real-time presentation and a non real-time presentation.

The real-time presentation may comprise at least one of a datacast presentation and a presentation based on a universal resource locator.

The non real-time presentation may comprise at least one of an intra, an outro, an advertisement, and a barker.

Obtaining a definition of a plurality of customized channels may further comprise obtaining a definition of a geographic location- based association between at least a portion of the auxiliary service and at least a portion of the base service.

The method may further comprise transmitting the definition of the geographic location-based association to the device.

The method may further comprise identifying a time when at least one of the defined plurality of base presentations, the defined plurality of auxiliary presentations, and the defined plurality of custom channels becomes valid.

According to an aspect of the present invention, there is provided a computer program resident in a computer readable medium that, when executed, directs a computer device to perform the actions of:
obtaining a definition of a plurality of base presentations associated with at least one base service;
obtaining a definition of a plurality of auxiliary presentations associated with at least one auxiliary service; and
obtaining a definition of a plurality of customized channels each comprising a predetermined combination of at least one of the plurality of base presentations and at least one of the plurality of auxiliary presentations, each of the customized channels associated with one of a plurality of retailers operable to provide multimedia service to a device.

According to an aspect of the present invention, there is provided at least one processor configured to perform the actions of:
obtaining a definition of a plurality of base presentations associated with at least one base service;
obtaining a definition of a plurality of auxiliary presentations associated with at least one auxiliary service; and
obtaining a definition of a plurality of customized channels each comprising a predetermined combination of at least one of the plurality of base presentations and at least one of the plurality of auxiliary presentations, each of the customized channels associated with one of a plurality of retailers operable to provide multimedia service to a device.

According to an aspect of the present invention, there is provided an apparatus for providing content information, comprising:
a means for obtaining a definition of a plurality of base presentations associated with at least one base service;
a means for obtaining a definition of a plurality of auxiliary presentations associated with at least one auxiliary service; and
a means for obtaining a definition of a plurality of customized channels each comprising a predetermined combination of at least one of the plurality of base presentations and at least one of the plurality of auxiliary presentations, each of the customized channels associated with one of a plurality of retailers operable to provide multimedia service to a device.

According to an aspect of the present invention, there is provided an apparatus for providing customized content, comprising:
a content server having a base presentation definition for each of plurality of base presentations corresponding to at least one base service and a auxiliary service definition for each of a plurality of auxiliary presentations corresponding to at least one auxiliary service;
a custom channel record for each of a plurality of retailers operable to define customized content to a device, each custom channel record comprising a custom definition based on a predetermined combination of at least one base presentation definition and at least one auxiliary service definition; and
a generator module operable to generate and transmit a message comprising each customized channel record.

The custom channel record may comprise retailer-specific associations between at least a portion of one of the plurality of base presentations and at least a portion of one of the plurality of the auxiliary presentations.

The retailer-specific associations may comprise associations received from a retailer that delivers the base service to the device.

The custom channel record may comprise geographic location-based associations between at least a portion of one of the plurality of base presentations and at least a portion of one of the plurality of auxiliary presentations.

The auxiliary presentation may comprise at least one of a real-time presentation and a non real-time presentation.

The real-time presentation may comprise at least one of a datacast presentation and a presentation based on a universal resource locator.

The non real-time presentation may comprise at least one of an intro, an outro, an advertisement, and a barker.

The apparatus may further comprise a validity time identifying a time when at least one of the base presentation definition, the auxiliary presentation definition, and the custom channel definition becomes valid.

According to an aspect of the present invention, there is provided a method for presenting customized content information, comprising:
receiving a plurality of base presentations corresponding to at least one base service;
receiving a plurality of auxiliary presentations corresponding to at least one auxiliary service;
receiving a definition of a plurality of custom channels each corresponding to one of a plurality of predetermined retailers, wherein each of the plurality of custom channels comprises a definition associating at least a predetermined one of a plurality of base services with at least a predetermined one of a plurality of auxiliary services; and
generating a custom channel from a predetermined combination of at least one of the plurality of base presentations and at least one of the plurality of auxiliary presentations based on the received definition of the plurality of custom channels.

The method may further comprise receiving subscription information corresponding to one of the base services subscribed to by a device from one of the plurality of predetermined retailers, wherein receiving a plurality of auxiliary presentations further comprises storing at least one of the plurality of auxiliary services based on the predetermined retailer associated with the subscription.

Storing at least one of the plurality of auxiliary services may further comprise storing based on the base service associated with the subscription information.

The method may further comprise receiving subscription information corresponding to one of the base services subscribed to by a device from one of the plurality of predetermined retailers, wherein receiving a plurality of auxiliary presentations further comprises storing at least a non real-time portion of one of the plurality of base services based on the predetermined retailer associated with the subscription.

Storing at least the non real-time portion one of the plurality of base services may further comprise storing based on the base service associated with the subscription information.

The method may further comprise receiving subscription information corresponding to one of the base services subscribed to by a device from one of the plurality of predetermined retailers, wherein receiving the definition of a plurality of custom channels further comprises storing at least one custom channel definition from the plurality of custom channel definitions based on the predetermined retailer associated with the subscription information.

Storing at least one custom channel definition may further comprise storing based on the base service associated with the subscription information.

The method may further comprise receiving subscription information corresponding to one of the base services subscribed to by a device from one of the plurality of predetermined retailers, wherein generating the custom channel comprises generating the custom channel based on the predetermined retailer associated with the subscription information.

Generating the custom channel may further comprise generating based on the base service associated with the subscription information.

Generating the custom channel may further comprise generating a view on a user interface of a device.

The method may further comprise receiving a definition of geographic location-based associations between at least a portion of one of the plurality of base presentations and at least a portion of one of the plurality of auxiliary presentations, further comprising receiving a geographic location of a device, and wherein generating further comprises generating based on the definition of geographic location-based associations and based on the geographic location.

The auxiliary service may comprise at least one of a real-time presentation and a non real-time presentation.

The real-time presentation may comprise at least one of a datacast presentation and a presentation based on a universal resource locator.

The non real-time presentation may comprise at least one of an intra, an outro, an advertisement, and a barker.

The method may further comprise receiving a definition of a time when at least one of the plurality of base presentations, the plurality of auxiliary presentations, and the defined custom channels becomes valid.

According to an aspect of the present invention, there is provided a computer program resident in a computer readable medium that, when executed, directs a computer device to perform the actions of:
receiving a plurality of base presentations corresponding to at least one base service;
receiving a plurality of auxiliary presentations corresponding to at least one auxiliary service;
receiving a definition of a plurality of custom channels each corresponding to one of a plurality of predetermined retailers, wherein each of the plurality of custom channels comprises a definition associating at least a predetermined one of a plurality of base services with at least a predetermined one of a plurality of auxiliary services; and
generating a custom channel from a predetermined combination of at least one of the plurality of base presentations and at least one of the plurality of auxiliary presentations based on the received definition of the plurality of custom channels.

According to an aspect of the present invention, there is provided at least one processor configured to perform the actions of:
receiving a plurality of base presentations corresponding to at least one base service;
receiving a plurality of auxiliary presentations corresponding to at least one auxiliary service;
receiving a definition of a plurality of custom channels each corresponding to one of a plurality of predetermined retailers, wherein each of the plurality of custom channels comprises a definition associating at least a predetermined one of a plurality of base services with at least a predetermined one of a plurality of auxiliary services; and
generating a custom channel from a predetermined combination of at least one of the plurality of base presentations and at least one of the plurality of auxiliary presentations based on the received definition of the plurality of custom channels.

According to an aspect of the present invention, there is provided an apparatus for providing content information, comprising:
a means for receiving a plurality of base presentations corresponding to at least one base service;
a means for receiving a plurality of auxiliary presentations corresponding to at least one auxiliary service;
a means for receiving a definition of a plurality of custom channels each corresponding to one of a plurality of predetermined retailers, wherein each of the plurality of custom channels comprises a definition associating at least a predetermined one of a plurality of base services with at least a predetermined one of a plurality of auxiliary services; and
a means for generating a custom channel from a predetermined combination of at least one of the plurality of base presentations and at least one of the plurality of auxiliary presentations based on the received definition of the plurality of custom channels.

According to an aspect of the present invention, there is provided a wireless device for providing customized content, comprising:
a computer platform;
a media manager module disposed on the computer platform and operable to receive a plurality of base presentations corresponding to at least one base service, a plurality of auxiliary presentations corresponding to at least one auxiliary service, and a definition of a plurality of custom channels each corresponding to one of a plurality of predetermined retailers, wherein each of the plurality of custom channels comprises a definition associating at least a predetermined one of a plurality of base services with at least a predetermined one of a plurality of auxiliary services; and
the media manager module operable to initiate generation of a custom channel from a predetermined combination of at least one of the plurality of base presentations and at least one of the plurality of auxiliary presentations based on the received definition of the plurality of custom channels.

The media manager module may further comprise subscription information corresponding to one of the base services subscribed to by the wireless device from one of the plurality of predetermined retailers, and wherein the media manager module is operable to store at least one of the plurality of auxiliary services based on the predetermined retailer associated with the subscription.

The media manager module may be operable to store at least one of the plurality of auxiliary services based on the base service associated with the subscription information.

The media manager module may further comprise subscription information corresponding to one of the base services subscribed to by a device from one of the plurality of predetermined retailers, and wherein the media manager module is operable to store at least a non real-time portion of one of the plurality of base services based on the predetermined retailer associated with the subscription.

The media manager module may be operable to store based on the base service associated with the subscription information.

The media manager module may further comprise subscription information corresponding to one of the base services subscribed to by the wireless device from one of the plurality of predetermined retailers, wherein the media manager module is operable to store at least one custom channel definition from the plurality of custom channel definitions based on the predetermined retailer associated with the subscription information.

The media manager module may be operable to store based on the base service associated with the subscription information.

The media manager module may further comprise subscription information corresponding to one of the base services subscribed to by the wireless device from one of the plurality of predetermined retailers, wherein the media manager module is operable to initiate generation the custom channel based on the predetermined retailer associated with the subscription information.

The media manager module may be operable to initiate generation of the custom channel based on the base service associated with the subscription information.

The apparatus may further comprise a user interface having a view of the custom channel.

The media manager module may further comprise a position-auxiliary service correlation record that defines geographic location-based associations between at least a portion of one of the plurality of base presentations and at least a portion of one of the plurality of auxiliary presentations, further comprising a position/location module operable to generate a geographic location of the device, and wherein the media manager module is further operable to initiate generation of the custom channel based on the position-auxiliary service correlation record and based on the geographic location.

The auxiliary service may comprise at least one of a real-time presentation and a non real-time presentation.

The real-time presentation may comprise at least one of a datacast presentation and a presentation based on a universal resource locator.

The non real-time presentation may comprise at least one of an intra, an outro, an advertisement, and a barker.

The media manager module may further comprise a validity time which defines a time when at least one of the plurality of base presentations, the plurality of auxiliary presentations, and the defined custom channels becomes valid.

## Claims

1. A method of providing customized media services to at least one wireless device (36), comprising:
receiving base services (16) from a plurality of content providers (18);
compiling service attribute information (20) corresponding to each base service (16);
receiving custom attribute information (22) for each base service (16) from a content retailer (24); and
generating a customized view of each of the received base services (16) by replacing at least a portion of the corresponding service attribute information (20) with custom attribute information (22) from the content retailer (24).

2. A method of providing customized media services to at least one wireless device (36) comprising:
receiving base services (16) from a plurality of content providers (18);
compiling service attribute information (20) corresponding to each base service (16);
receiving custom attribute information (22) for each base service (16) from a content retailer (24); and
generating a customized view of each of the received base services (16) by supplementing the corresponding service attribute information (20) with custom attribute information (22) from the content retailer (24).

3. The method of claim 1 or claim 2, wherein:
each customized view comprises a channel (26) associated with the content retailer (24), wherein a plurality of the channels (26) associated with the content retailer (24) are grouped to form at least one tier (32) associated with the content retailer (24).

4. The method of claim 3, further comprising:
forming a plurality of tiers (32) associated with the content retailers (24); and
grouping the plurality of tiers (32) associated with the content retailer (24) to form at least one package (34) associated with the content retailer (24), wherein the at least one package (34) is offered for subscription to the at least one wireless device (36).

5. The method of claim 1 or claim 2, wherein each customized view comprises:
at least one presentation (42) from one of the plurality of base services (16) in a predetermined combination with at least one auxiliary presentation (48) from an auxiliary service (50), wherein the auxiliary service is provided by the content retailer to customize and enhance the base service (16).

6. A media distribution system, comprising:
means for receiving base services (16) from a plurality of content providers (18);
means for compiling service attribute information (20) corresponding to each base service (16);
means for receiving custom attribute information (22) for each base service (16) from a content retailer (24); and
means for generating a customized view of each of the received base services (16) by replacing at least a portion of the corresponding service attribute information (20) with custom attribute information (22) from the content retailer (24).

7. The media distribution system of claim 6, wherein:
each customized view comprises a channel (26) associated with the content retailer (24), wherein a plurality of the channels (26) associated with the content retailer (24) are grouped to form at least one tier (32) associated with the content retailer (24).

8. The media distribution system of claim 7, further comprising:
means for forming a plurality of tiers (32) associated with the content retailers (24); and
means for grouping the plurality of tiers (32) associated with the content retailer (24) to form at least one package (34) associated with the content retailer (24), wherein the at least one package (34) is offered for subscription to at least one wireless device (36) associated with the content retailer(24).

9. The media distribution system of claim 6, wherein each customized view comprises:
at least one presentation (42) from one of the plurality of base services (16) in a predetermined combination with at least one auxiliary presentation (48) from an auxiliary service (50), wherein the auxiliary service is provided by the content retailer to customize and enhance the base service (16).

10. A media distribution system, comprising:
means for receiving base services (16) from a plurality of content providers (18);
means for compiling service attribute information (20) corresponding to each base service (16);
means for receiving custom attribute information (22) for each base service (16) from a content retailer (24); and
means for generating a customized view of each of the received base services (16) by supplementing the corresponding service attribute information (20) with custom attribute information (22) from the content retailer (24).

11. The media distribution system of claim 10, wherein:
each customized view comprises a channel (26) associated with the content retailer (24), wherein a plurality of the channels (26) associated with the content retailer (24) are grouped to form at least one tier (32) associated with the content retailer (24).

12. The media distribution system of claim 11, further comprising:
means for forming a plurality of tiers (32) associated with the content retailers (24); and
means for grouping the plurality of tiers (32) associated with the content retailer (24) to form at least one package (34) associated with the content retailer (24), wherein the at least one package (34) is offered for subscription to at least one wireless device (36) associated with the content retailer (24).

13. The media distribution system of claim 10, wherein each customized view comprises:
at least one presentation (42) from one of the plurality of base services (16) in a predetermined combination with at least one auxiliary presentation (48) from an auxiliary service (50), wherein the auxiliary service is provided by the content retailer to customize and enhance the base service (16).

14. A non-transitory computer readable storage medium having stored thereon processor-executable software instructions configured to cause a processor to perform the method of any of Claims 1 to 5.
